# EUROPEAN PATENT SPECIFICATION

(11) **EP 2 547 945 B1**
(45) Date of publication and mention of the grant of the patent: **05.03.2014**
(21) Application number: 11710964.5
(22) Date of filing: 16.03.2011
(51) Int. Cl.: F16L 23/06

(54) **SANITARY CLAMP COUPLER WITH RADIAL SEAL**
SANITÄRKLEMMENKOPPLER MIT RADIALDICHTUNG
COUPLEUR DE COLLIER SANITAIRE POURVU D'UN JOINT RADIAL

(30) Priority: 18.03.2010 US 315288 P
(43) Date of publication of application: 23.01.2013
(73) Proprietor: Graco Minnesota Inc., Minneapolis, MN 55413 (US)
(72) Inventor: HORNING, Jeromy DeLayne, Albertville Minnesota 55301 (US); WROBEL, Steve J., Rogers Minnesota 55374 (US); DALTON, James M., Osseo, MN 55311-4511 (US); LINS, Christopher A., Crystal Minnesota 55428 (US); KURVERS, Craig T., Sartell Minnesota 56377 (US)
(74) Representative: Miller Sturt Kenyon
(86) International application number: PCT/US2011/028647
(87) International publication number: WO 2011/116079

(56) References cited:
- DE-C1- 19 939 161
- DE-U1-202010 002 824
- FR-A5- 2 075 075
- US-A1- 2009 091 125

## Description

### BACKGROUND ART

Industry standard clamps that lock two halves of a piping system together are well known. Such clamps have a threaded fitting that can tighten the two halves that are hinged.

DE 199 39 161 discloses a connection element for hoses and/or pipes that connects plugable connection nipples with sealing rings on the ends of the hoses/pipes. The element has a two-part sleeve-like element and a similar securing element. The sleeve element has sloping faces extending outwards in an axial direction. At least one of the nipples has a peripheral ring to support the clamp element. This is formed by a divided conical ring plate corresponding to the sloping faces, and the plate parts are connected to suitable clamp elements to secure the sleeve element.

### DISCLOSURE OF THE INVENTION

It is an object of this invention to provide a quick disconnect that uses an industry standard sanitary clamp, retains a gasket seal, allows the operator to easily align the parts, and can be used for high pressure applications.

According to an aspect of the invention, there is provided a fluid coupler as defined in claim 1.

Such clamps are known from DE 19939161C1 or DE 20 2010 00 2824 U1.

The system uses an industry standard clamp that locks two halves of a piping system together. The clamp has a threaded fitting that can tighten the two halves that are hinged. The system tightens on two angles on the clamp and flanges so the fit is tight with hand torque. The seal is designed using an o-ring that compresses radially verses a seal that is compressed axially.

The sanitary clamp member is traditionally used for ½" or ¾" tube connections where the seal is a face seal design which seals between the two flat faces of the pieces being clamped. This design does not capture the seal so it can be dropped and lost. The seal is compressed axially and not radially. The design was meant for drop in replacement of components in a piping system. The instant invention has adopted the clamp member to be used for a quick disconnect that captures the seal and aligns the two halves before the clamp is applied for easy of assembly. The seal diameter is also smaller so it will generate lower forces due to pressure so the overall pressure rating can be higher.

These and other objects and advantages of the invention will appear more fully from the following description made in conjunction with the accompanying drawings wherein like reference characters refer to the same or similar parts throughout the several views.

### BRIEF DESCRIPTION OF DRAWINGS

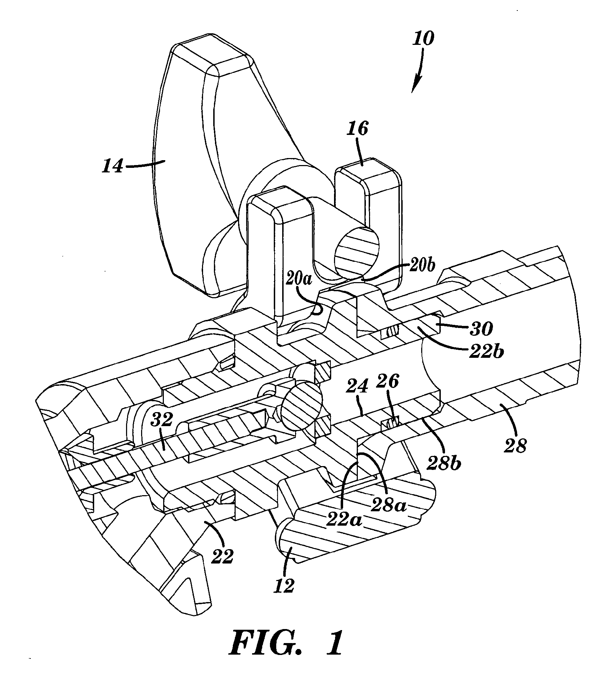

Figure 1 shows a cross-section of the quick disconnect of the instant invention.

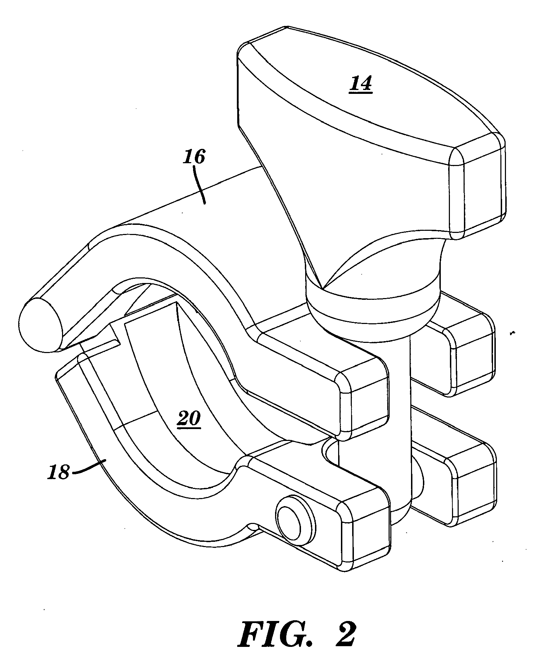

Figure 2 shows a view of a standard sanitary clamp member used with the instant invention.
Figure 3 shows the uncoupled quick disconnect.
Figure 4 shows the coupled quick disconnect.

### BEST MODE FOR CARRYING OUT THE INVENTION

The coupler, generally designated 10, of the instant invention is comprised of a conventional sanitary clamp member 12 having a handle 14 of releasably clamping first and second halves 16 and 18 together. The inner surface of halves 16 and 18 is provided with a groove 20 having angled sides 20a and 20b which serve to axially press together male 22 and female 28 members together as handle 14 is tightened.

Male member 22 has a generally cylindrical plug 24 with end 30 which extends into socket 28b of female member 28. An O-ring 26 is located on the circumference of plug 24 and seals against the inner cylindrical surface of socket 28b. Face 22a of male member 22 and face 28a of female member 28 are pressed against one another to both seal and hold both members in rigid axial alignment with one another.

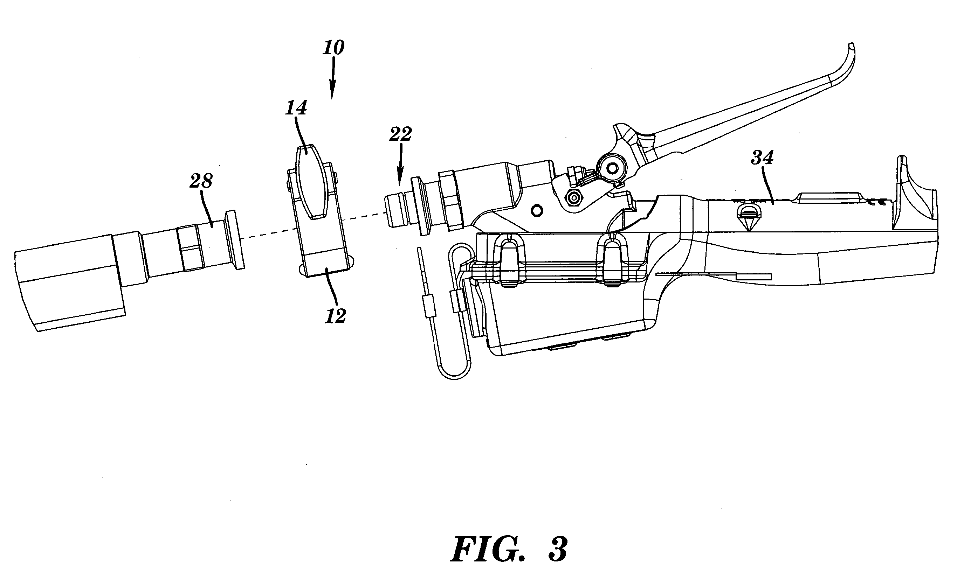

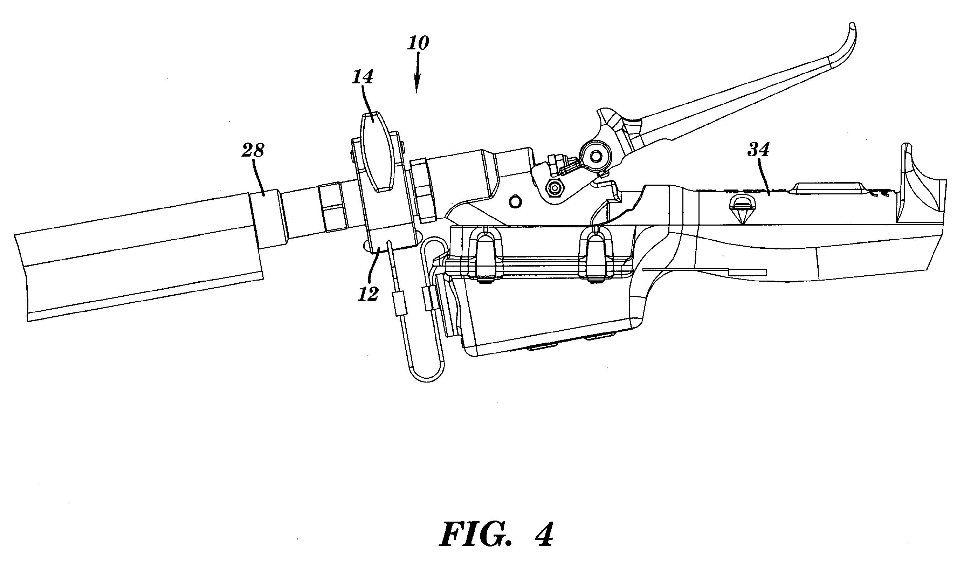

As shown in Figures 3 and 4, male member 22 is located on the control valve 34 (having valve element 32) and female member 28 is located on application device 36. Of course, the location of the two members may be reversed as desired.

It is contemplated that various changes and modifications may be made to the coupler without departing from the scope of the invention as defined by the following claims.

## Claims

1. A fluid coupler (10) comprising:
a sanitary clamp member (12) comprising:
first and second halves (16, 18);
a handle (14) for releasably clamping said halves (16, 18) together;
a male member (22) having a face (22a) and a generally cylindrical plug (24) having a circumference;
a female member (28) having a face (28a) and a socket (28b) having an inner cylindrical surface, said male member (22) being removably extendable into said socket (28b);
an O-ring (26) located on the circumference of said plug (24) and sealing against said inner cylindrical surface of said socket (28b), whereby said male member face (22a) and said female member face (28a) are pressed against one another to both seal and hold both members (22, 28) in rigid axial alignment with one another when said handle (14) is tightened;
**characterized in that** the inner surface of said halves (16, 18) is provided with a groove (20) having angled sides (20a, b), which serve to axially press said male member (22) and said female member (28) together as said handle (14) is tightened.

## Patentansprüche

1. Fluidkoppler (10), der Folgendes umfasst:
ein Sanitärklammerelement (12), das Folgendes umfasst:
eine erste und eine zweite Hälfte (16, 18);
einen Handgriff (14) zum lösbaren Zusammenklemmen der Hälften (16, 18);
ein Einschubelement (22) mit einer Stirnfläche (22a) und einem allgemein zylindrischen Stopfen (24) mit einem Umfang;
ein Aufnahmeelement (28) mit einer Stirnfläche (28a) und einer Aufnahmebuchse (28b) mit einer zylindrischen Innenfläche, wobei sich das Einschubelement (22) herausnehmbar in die Aufnahmebuchse (28b) hinein erstrecken kann;
einen O-Ring (26), der entlang des Umfangs des Stopfens (24) angeordnet ist und gegen die zylindrische Innenfläche der Aufnahmebuchse (28b) abdichtet, wobei die Stirnfläche (22a) des Einschubelements und die Stirnfläche des Aufnahmeelements (28a) gegeneinander gepresst werden, um sowohl abzudichten als auch beide Elemente (22, 28) in starrer axialer Ausrichtung aufeinander zu halten, wenn der Handgriff (14) festgezogen wird;
**dadurch gekennzeichnet, dass** die Innenfläche der Hälften (16, 18) mit einer Nut (20) mit gewinkelten Seiten (20a, b) versehen ist, die dazu dienen, das Einschubelement (22) und das Aufnahmeelement (28) axial zusammenzupressen, wenn der Handgriff (14) festgezogen wird.

## Revendications

1. Coupleur de fluide (10) comprenant:
un élément de collier sanitaire (12) comprenant:
une première et seconde moitié (16,18);
une poignée (14) pour serrer conjointement de manière réversible lesdites moitiés (16,18);
un élément mâle (22) ayant une face (22a) et une fiche généralement cylindrique (24) ayant une circonférence;
un élément femelle (28) ayant une face (28a) et une prise femelle (28b) ayant une surface cylindrique intérieure, ledit élément mâle (22) étant étendable de manière amovible à l'intérieur de ladite prise femelle (28b);
un joint torique (26) situé sur la circonférence de ladite fiche (24) et isolant de manière étanche contre ladite surface cylindrique intérieure de ladite prise femelle (28b), moyennant quoi ladite face d'élément mâle (22a) et ladite face d'élément femelle (28a) sont pressées l'une contre l'autre pour à la fois isoler de manière étanche et retenir les deux éléments (22,28) dans un alignement axial rigide l'une avec l'autre quand ladite poignée (14) est serrée;
**caractérisé en ce que** la surface intérieure desdites moitiés (16,18) est pourvue d'une rainure (20) ayant des côtés angulaires (20a,b), qui servent à presser conjointement axialement ledit élément mâle (22) et ledit élément femelle (28) lorsque ladite poignée (14) est serrée.
